(19) Europäisches Patentamt
European Patent Office
Office européen des brevets

(11) **EP 1 266 194 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(21) Anmeldenummer: **01907519.1**

(22) Anmeldetag: **09.02.2001**

(51) Int Cl.:
*G01F 23/296* (2006.01)  *G01N 9/00* (2006.01)

(86) Internationale Anmeldenummer:
**PCT/EP2001/001442**

(87) Internationale Veröffentlichungsnummer:
**WO 2001/073383 (04.10.2001 Gazette 2001/40)**

(54) **VERFAHREN UND VORRICHTUNG ZUR FESTSTELLUNG UND/ODER ÜBERWACHUNG DES FÜLLSTANDES EINES MEDIUMS IN EINEM BEHÄLTER**

METHOD AND DEVICE FOR DETECTING AND/OR MONITORING THE LEVEL OF A MEDIUM IN A CONTAINER

PROCEDE ET DISPOSITIF DE DETECTION ET/OU DE CONTROLE DU NIVEAU D'UN FLUIDE DANS UN CONTENEUR

(84) Benannte Vertragsstaaten:
**AT BE CH CY DE DK ES FI FR GB GR IE IT LI LU MC NL PT SE TR**

(30) Priorität: **24.03.2000 DE 10014724**

(43) Veröffentlichungstag der Anmeldung:
**18.12.2002 Patentblatt 2002/51**

(73) Patentinhaber: **Endress + Hauser GmbH + Co. KG**
**79689 Maulburg (DE)**

(72) Erfinder:
• **D'ANGELICO, Sascha**
**79588 Efringen-Kirchen (DE)**

• **LOPATIN, Sergej**
**79540 Lörrach (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 282 251   US-A- 4 740 726**

**Beschreibung**

Die Erfindung bezieht sich auf ein Verfahren und eine Vorrichtung zur Feststellung und/oder Überwachung des Füllstandes eines Mediums in einem Behälter bzw. zur Ermittlung der Dichte eines Mediums in einem Behälter gemäß dem Oberbegriff der Ansprüche 1 bzw. 10.

Es sind bereits Vorrichtungen mit zumindest einem Schwingelement, sog. Vibrationsdetektoren, zur Detektion bzw. zur Überwachung des Füllstandes eines Mediums in einem Behälter bekannt geworden. Bei dem Schwingelement handelt es sich üblicherweise um zumindest einen Schwingstab, der an einer Membran befestigt ist. Die Membran wird über einen elektromechanischen Wandler, z. B. ein piezo-elektrisches Element, zu Schwingungen angeregt. Aufgrund der Schwingungen der Membran führt auch das an der Membran befestigte Schwingelement Schwingungen aus.

Eine derartige Vorrichtung ist z.B. aus EP-A-0282 251 bekannt.

Als Füllstandsmeßgeräte ausgebildete Vibrationsdetektoren nutzen den Effekt aus, daß die Schwingungsfrequenz und die Schwingungsamplitude abhängig sind von dem jeweiligen Bedeckungsgrad des Schwingelements: Während das Schwingelement in Luft frei und ungedämpft seine Schwingungen ausführen kann, erfährt es eine Frequenz- und Amplitudenänderung, sobald es teilweise oder vollständig in das Medium eintaucht. Anhand einer vorbestimmten Frequenzänderung (üblicherweise wird die Frequenz gemessen) läßt sich folglich ein eindeutiger Rückschluß auf das Erreichen des vorbestimmten Füllstandes des Mediums in dem Behälter ziehen. Füllstandsmeßgeräte werden übrigens vornehmlich als Überfüllsicherungen oder zum Zwecke des Pumpenleerlaufschutzes verwendet.

Darüber hinaus wird die Dämpfung der Schwingung des Schwingelements auch von der jeweiligen Dichte des Mediums beeinflußt. Daher besteht bei konstantem Bedeckungsgrad eine funktionale Beziehung zur Dichte des Mediums, so daß Vibrationsdetektoren sowohl für die Füllstands- als auch für die Dichtebestimmung bestens geeignet sind. In der Praxis werden zwecks Überwachung und Erkennung des Füllstandes bzw. der Dichte des Mediums in dem Behälter die Schwingungen der Membran aufgenommen und mittels zumindest eines Piezoelements in elektrische Empfangssignale umgewandelt.

Die elektrischen Empfangssignale werden anschließend von einer Auswerte-Elektronik ausgewertet. Im Falle der Füllstandsbestimmung überwacht die Auswerte-Elektronik die Schwingungsfrequenz und/oder die Schwingungsamplitude des Schwingelements und signalisiert den Zustand 'Sensor bedeckt' bzw. 'Sensor unbedeckt', sobald die Meßwerte einen vorgegebenen Referenzwert unter- oder überschreiten. Eine entsprechende Meldung an das Bedienpersonal kann auf optischem und/oder auf akustischem Weg erfolgen. Alternativ oder zusätzlich wird ein Schaltvorgang ausgelöst; so wird etwa ein Zu- oder Ablaufventil an dem Behälter geöffnet oder geschlossen.

Die zuvorgenannten Geräte zum Messen des Füllstandes oder der Dichte werden in einer Vielzahl von Industriezweigen eingesetzt, beispielsweise in der Chemie, in der Lebensmittelindustrie oder bei der Wasseraufbereitung. Die Bandbreite der überwachten Füllgüter reicht von Wasser über Yoghurt, Farben und Lacke bis hin zu hochviskosen Füllgütern, wie Honig, oder bis hin zu stark schäumenden Füllgütern, wie Bier.

Probleme bei der Füllstands- bzw. Dichtemessung mittels Vibrationsdetektoren bereitet die Tatsache, daß es keinen eineindeutigen Zusammenhang zwischen einer auftretenden Frequenzänderung und dem Bedeckungsgrad bzw. der Dichte des Mediums gibt. Eine wesentliche Störgröße, die sich ebenso wie die Ankopplung an die Masse des Mediums in einer Verschiebung der Resonanzfrequenz bemerkbar macht, stellt die Massenänderung an der schwingfähigen Einheit dar. Eine Massenänderung kann sowohl durch Ansatzbildung, also durch die Bildung von Ablagerungen des Mediums an der schwingfähigen Einheit, als auch durch die Korrosion der Schwingstäbe hervorgerufen werden. Je nach Art und Grad der Massenänderung kann hier der höchst unerwünschte Fall eintreten, daß der Sensor dauerhaft 'Bedeckt' bzw. 'Unbedeckt' und damit das Erreichen des vorbestimmten Füllstandes meldet, obwohl der Grenzfüllstand noch nicht erreicht ist. Analoges gilt hinsichtlich der Dichtemessung: Es wird die falsche Dichte des Mediums gemessen und angezeigt.

Der Erfindung liegt die Aufgabe zugrunde, ein Verfahren und eine Vorrichtung vorzuschlagen, die eine verläßliche Bestimmung und/oder Überwachung des Füllstandes oder der Dichte eines Mediums erlauben.

Die Aufgabe wird durch das Verfahren nach Anspruch 1 dadurch gelöst, dass ein erster Mode und ein zweiter Mode der Schwingungen der schwingfähigen Einheit ausgewertet werden und daß anhand der ausgewerteten Moden eine Massenänderung der schwingfähigen Einheit erkannt wird. Obwohl im nachfolgenden oftmals ausschließlich Bezug auf einen Massenzuwachs genommen wird, der sich bei Ansatzbildung an der schwingfähigen Einheit einstellt, gelten vergleichbare Überlegungen natürlich für den Massenschwund, der u.a. eine Folge der Korrosion der Schwingstäbe sein kann.

Die Erfindung basiert auf dem physikalischen Effekt, daß sich bei Erregung der schwingfähigen Einheit unterschiedliche Schwingungsmoden ausbilden. An nachfolgender Stelle wird noch näher ausgeführt, welche unterschiedlichen Schwingungsmoden bei einem Vibrationsdetektor mit beispielsweise paddelförmigen Schwingstäben auftreten.

Gemäß einer vorteilhaften Weiterbildung des erfindungsgemäßen Verfahrens ist vorgesehen, daß als erster und zweiter Mode Moden ausgewertet werden, deren Schwingungen von dem Medium unterschiedlich beeinflußt werden.

Eine bevorzugte Variante des erfindungsgemäßen Verfahrens schlägt vor, daß es sich bei dem ersten Mode um einen Mode handelt, dessen Schwingungen im wesentlichen unabhängig sind von dem Medium, und daß es sich bei dem zweiten Mode um einen Mode handelt, dessen Schwingungen von dem Medium beeinflußt werden. Konkret bedeutet dies, daß als erster Mode ein Mode ausgewählt wird, dessen Eigenfrequenz bzw. Resonanzfrequenz sich infolge einer Massenänderung verschiebt, dessen Resonanzfrequenz jedoch im wesentlichen unverändert bleibt, wenn die schwingfähige Einheit in Kontakt mit dem Medium kommt. Für den ersten Mode kommen daher alle Moden in Frage, bei denen die Querschnittsflächen 'Schwingstäbe-Medium' der Schwingstäbe in Schwingrichtung klein sind. Ist diese Voraussetzung erfüllt, so ist die Wechselwirkung der schwingfähigen Einheit mit dem Medium und damit die Massenankopplung der schwingfähigen Einheit an das Medium relativ gering. Als zweiter Mode wird ein Mode ausgewählt, dessen Eigenfrequenz sich eklatant ändert, sobald die schwingfähige Einheit in Kontakt mit dem Medium kommt.

Eine vorteilhafte Weiterbildung des erfindungsgemäßen Verfahrens sieht vor, daß anhand einer Änderung des ersten Modes, dessen Schwingungen im wesentlichen unabhängig von dem Medium sind, erkannt wird, ob an der schwingfähigen Einheit eine Massenänderung aufgetreten ist. Insbesondere ist vorgesehen, daß anhand einer Frequenzänderung der Schwingungen des ersten Modes eine Ansatzbildung bzw. ein Massenschwund an der schwingfähigen Einheit erkannt wird.

Während die zuvor beschriebene erste Variante des erfindungsgemäßen Verfahrens vorsieht, daß zwei Moden ausgewählt werden, die gänzlich unterschiedliche Reaktionen als Folge der Massenänderung bzw. als Folge des Kontakts mit dem Medium zeigen, geht eine zweite Variante einen anderen Weg. Gemäß der alternativen zweiten Variante des erfindungsgemäßen Verfahrens ist vorgesehen, daß als erster Mode und als zweiter Mode der Schwingungen der schwingfähigen Einheit zwei Moden ausgewählt werden, wobei beide Moden jeweils einen ersten Anteil aufweisen, der abhängig ist von der Ankopplung an die Masse des Mediums, und wobei beide Moden einen zweiten Anteil aufweisen, der unabhängig ist von der Ankopplung an die Masse des Mediums und der nur von der jeweiligen Masse der schwingfähigen Einheit abhängig ist.

Eine vorteilhafte Weiterbildung des erfindungsgemäßen Verfahrens sieht vor, daß anhand der funktionalen Abhängigkeit des ersten und des zweiten Modes der Schwingungen der schwingfähigen Einheit von dem Medium bzw. von der Masse der schwingfähigen Einheit Rückschlüsse auf eine Massenänderung der schwingfähigen Einheit gezogen werden. Die einzige Forderung, die hinsichtlich der Auswahl der beiden Moden zu stellen ist, daß sie sich hinreichend voneinander unterscheiden.

Die Ermittlung des Einflusses der Ansatzbildung auf die Meßwerte erfolgt bevorzugt über ein Gleichungssystem, das sich aus den beiden nachfolgend genannten Formeln zusammensetzt:

$$\Delta F_C = f_C^1(m_k) + f_C^2(m_a)$$

$$\Delta F_D = f_D^1(m_k) + f_D^2(m_a)$$

Die in diesem Gleichungssystem verwendeten Symbole kennzeichnen die folgenden Größen:

$\Delta F_C$: die relative Frequenzverschiebung eines ersten Modes;
$\Delta F_D$ : die relative Frequenzverschiebung eines zweiten Modes;
wobei der Term

$$\Delta F[\%] = \left( \frac{F_{Meß}[Hz]}{F_{Luft,ohne\_Ansatz}[Hz]} - 1 \right) * 100\%$$

jeweils die relative Frequenzverschiebung der Eigenfrequenz des entsprechenden Modes symbolisiert, wobei relativ bedeutet, daß die gemessene Frequenzverschiebung in bezug auf die entsprechende Eigenfrequenz in Luft ohne Ansatzbildung in Prozent ausgedrückt wird.

$m_k$ : ein Maß für jegliche Art von Massenankopplung an und Dämpfung durch das Medium. Hier spielen - wie bereits an vorhergehender Stelle beschrieben - neben der Eintauchtiefe h der schwingfähigen Einheit auch die Dichte ρ des Mediums und die Viskosität η des Mediums eine Rolle. Rechnerisch läßt sich dies durch folgende funktionale Beziehung ausdrücken: $m_k = f(h; \rho, \eta)$ ;

$m_a$ : die Ansatzmasse;

$f_C^1 (m_k)$, $f_D^2 (m_k)$: die Frequenzverschiebungskurven zweier hinreichend unterschiedlicher Moden (z. B. Mode C und Mode D) der schwingfähigen Einheit als Funktion der Massenankopplung $m_k$ der schwingfähigen Einheit an und der Dämpfung der schwingfähigen Einheit durch das Medium ($\rightarrow$ Eintauchkurven);

$f_C^2 (m_a)_1$ $f_D^2 (m_a)$: die Frequenzverschiebungskurven zweier hinreichend unterschiedlicher Moden (z. B. Mode C und Mode D) der schwingfähigen Einheit als Funktion der Ansatzbildung $m_a$ an der schwingfähigen Einheit ($\rightarrow$ Ansatzkurven).

Eine vorteilhafte Ausgestaltung des erfindungsgemäßen Verfahrens sieht vor, daß eine Fehlermeldung ausgegeben wird, wenn die durch Massenänderung der schwingfähigen Einheit hervorgerufenen Frequenzänderungen eines ersten und/oder eines zweiten Modes der Schwingungen der schwingfähigen Einheit einen vorgegebenen Sollwert überschreiten.

Besonders vorteilhaft ist es, wenn eine durch Massenänderung an der schwingfähigen Einheit hervorgerufene Änderung eines ersten und/oder eines zweiten Modes der Schwingungen der schwingfähigen Einheit dazu verwendet wird, eine Inline-Korrektur der Meßdaten der schwingfähigen Einheit vorzunehmen.

Bezüglich der erfindungsgemäßen Vorrichtung wird die Aufgabe durch die Vorrichtung nach Anspruch 10 gelost. Die Regel-/Auswerteeinheit zieht zumindest einen ersten Mode und einen zweiten Mode der Schwingungen der schwingfähigen Einheit zur Auswertung heran und die Regel-/Auswerteeinheit erkennt anhand der ausgewerteten Moden eine Massenänderung an der schwingfähigen Einheit.

Eine vorteilhafte Ausgestaltung der erfindungsgemäßen Vorrichtung sieht vor, daß die Auswerte-/Regeleinheit in die Vorrichtung zur Bestimmung und/oder Überwachung des Füllstandes bzw. zur Bestimmung der Dichte des Mediums integriert ist. Bei der erfindungsgemäßen Vorrichtung handelt es sich in diesem Falle um einen sog. Kompaktsensor. Die Fehlermeldung kann z. B. optisch, akustisch und/oder über zumindest zwei Datenleitungen digital ausgegebenen werden.

Eine zum Kompaktsensor alternative Ausgestaltung der erfindungsgemäßen Vorrichtung sieht zumindest zwei Datenleitungen vor, über die die Meßdaten zur Auswerte-/Regeleinheit geleitet werden oder über die die Auswerte-/Regeleinheit mit einer entfernten Kontrollstelle kommuniziert. Besonders vorteilhaft ist es in diesem Zusammenhang, wenn die jeweiligen Meß- und/oder Korrekturdaten digital an die entfernte Kontrollstelle übertragen werden. Die digitale Datenkommunikation hat gegenüber der analogen Datenübertragung den bekannten Vorteil einer erhöhten Störsicherheit. Für die Kommunikation kann selbstverständlich auf die bekannten Übertragungsprotokolle und Übertragungsstandards zurückgegriffen werden.

Gemäß einer bevorzugten Weiterbildung der erfindungsgemäßen Vorrichtung wird eine Ausgabeeinheit vorgeschlagen, die optisch und/oder akustisch eine Fehlermeldung an das Bedienpersonal ausgibt, wenn, bevorzugt im Rahmen vorgegebener Toleranzwerte, ein vorgegebener Sollwert der Frequenzänderung über- oder unterschritten wird, der auf eine Massenänderung der schwingfähigen Einheit zurückzuführen ist.

Darüber hinaus ist vorteilhafterweise vorgesehen, daß der Regel-/Auswerteeinheit eine Speichereinheit zugeordnet ist, in der Sollwerte für tolerierbare Frequenzänderungen, die auf eine Massenänderung zurückgehen, abgespeichert sind.

Die Erfindung wird anhand der nachfolgenden Zeichnungen näher erläutert. Es zeigt:

Fig. 1: eine schematische Darstellung der erfindungsgemäßen Vorrichtung,

Fig. 2: mögliche, ausgewählte Schwingungsmoden einer bevorzugten schwingfähigen Einheit mit zwei paddelförmigen Schwingstäben:

a) Mode A, bei dem eine auftretende Frequenzänderung von der Massenankopplung an das Medium beeinflußt wird,
b) Mode B, bei dem eine auftretende Frequenzänderung im wesentlichen auf Ansatzbildung zurückgeht,
c) Mode C, bei dem die Frequenzänderung sowohl durch die Ansatzbildung als auch durch die Ankopplung an die Masse des Mediums beeinflußt wird,
d) Mode D, bei dem die Frequenzänderung sowohl durch die Ansatzbildung als auch durch die Ankopplung an die Masse des Mediums beeinflußt wird

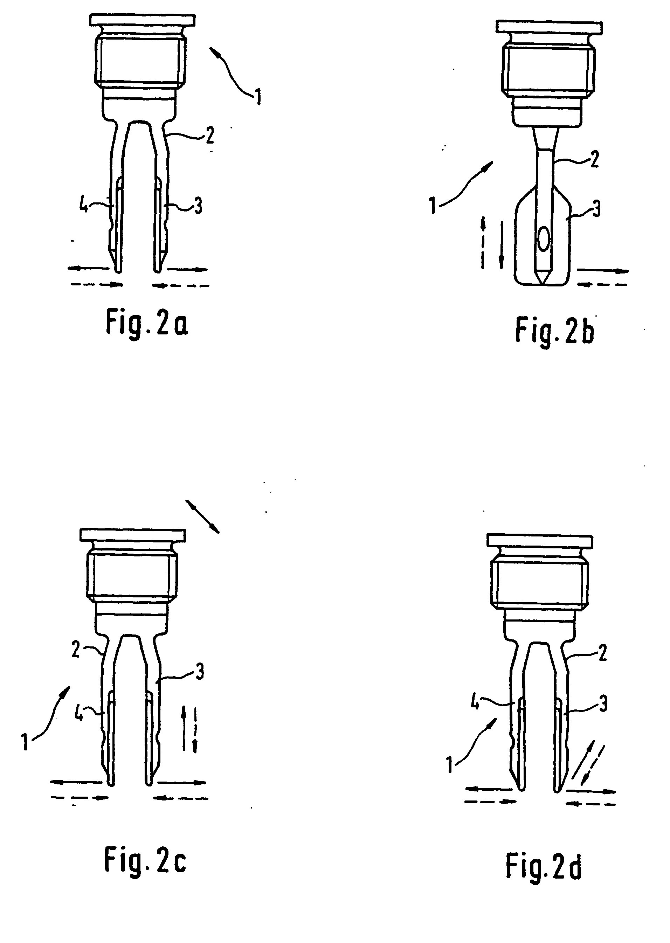

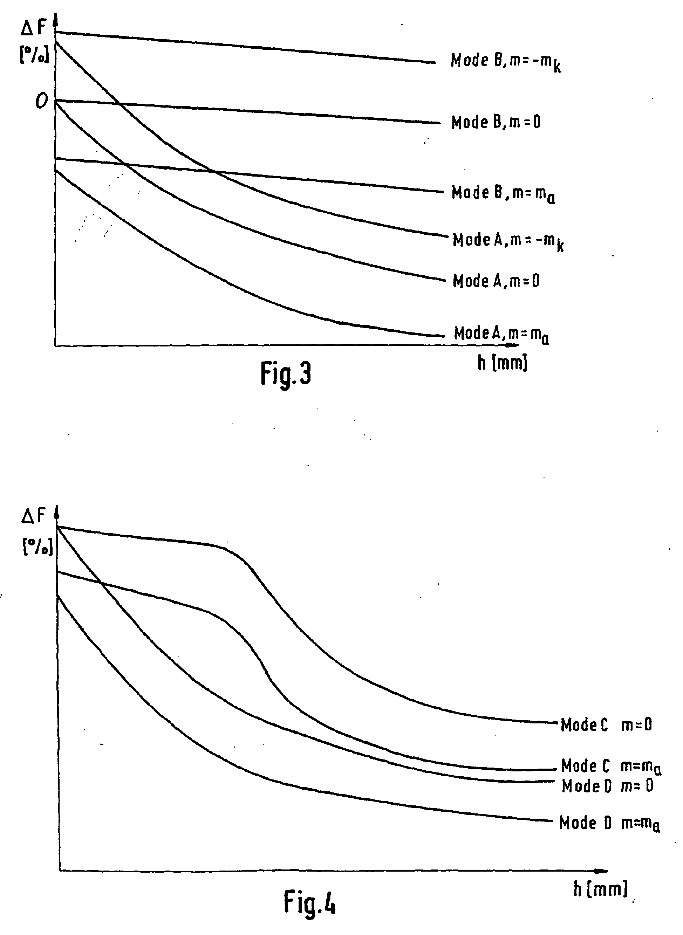

Fig. 3: skizzierte Eintauchkurven der in den Figuren Fig. 2a und Fig. 2b dargestellten Moden A und B mit und ohne Ansatzmasse und bei negativer Massenänderung,

Fig. 4: skizzierte Eintauchkurven der in den Figuren Fig. 2c und Fig. 2d dargestellten Moden mit und ohne Ansatzmasse,

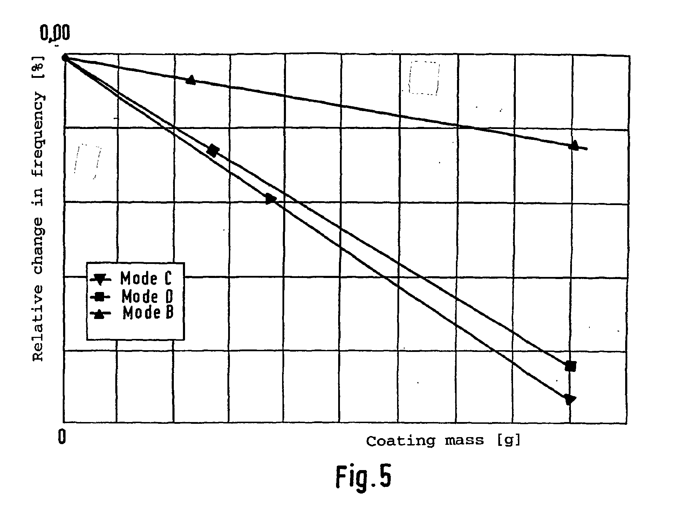

Fig. 5: schematische Darstellung der Ansatzkurven unterschiedlicher Moden in Luft und

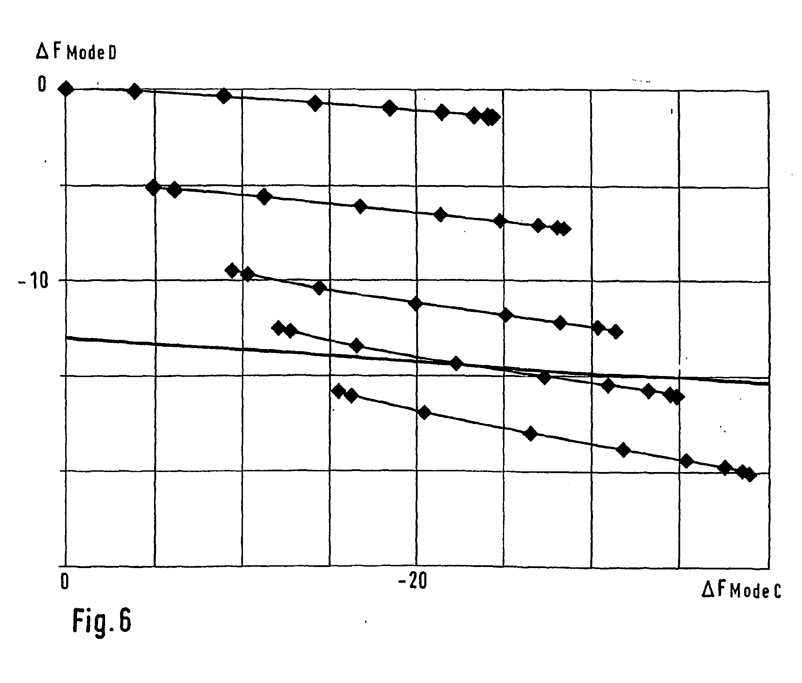

Fig. 6: eine graphische Darstellung der Frequenzänderungs-Tupel.

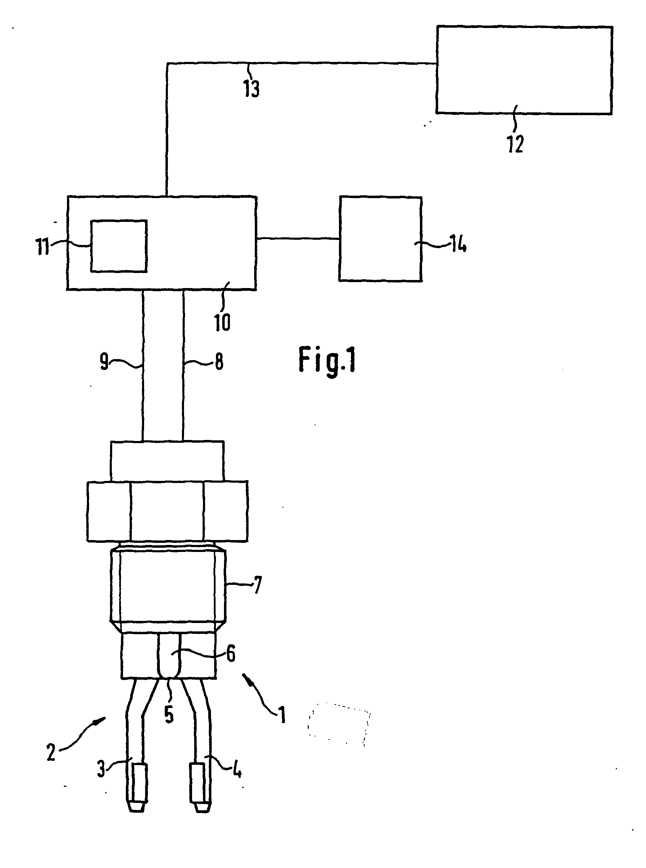

Fig. 1 zeigt eine schematische Darstellung der erfindungsgemäßen Vorrichtung 1 zur Feststellung und/oder Überwachung des Füllstandes eines Mediums in einem Behälter - Behälter und Medium sind übrigens in der Fig. 1 nicht gesondert dargestellt. Die in der Fig. 1 gezeigte Vorrichtung 1 ist - wie bereits an vorhergehender Stelle erläutert - sowohl zur Füllstandserkennung als auch zur Bestimmung der Dichte des in dem Behälter befindlichen Mediums geeignet. Während im Fall der Füllstandserkennung die schwingfähige Einheit 2 nur bei Erreichen des detektierten Grenzfüllstandes in das Medium bzw. nicht in das Medium eintaucht, muß sie zwecks Überwachung bzw. zwecks Bestimmung der Dichte $\rho$ kontinuierlich bis zu einer vorbestimmten Eintauchtiefe h in das Medium eintauchen. Bei dem Behälter kann es sich beispielsweise um einen Tank aber auch um ein Rohr handeln, das von dem Medium durchflossen wird.

Die Vorrichtung 1 weist ein im wesentlichen zylindrisches Gehäuse auf. An der Mantelfläche des Gehäuses ist ein Gewinde 7 vorgesehen. Das Gewinde 7 dient zur Befestigung der Vorrichtung 1 auf der Höhe eines vorbestimmten Füllstandes und ist in einer entsprechenden Öffnung des Behälters angeordnet. Es versteht sich von selbst, daß andere Arten der Befestigung, z.B. mittels eines Flansches, das Verschrauben ersetzen können.

Das Gehäuse des Vibrationsdetektors 1 ist an seinem in den Behälter 3 hineinragenden Endbereich von der Membran 5 abgeschlossen, wobei die Membran 5 in ihrem Randbereich in das Gehäuse eingespannt ist. An der Membran 5 ist die in den Behälter ragende schwingfähige Einheit 2 befestigt. Im dargestellten Fall hat die schwingfähige Einheit 2 die Ausgestaltung einer Stimmgabel, umfaßt also zwei voneinander beabstandete, auf der Membran 5 befestigte und in den Behälter hineinragende Schwingstäbe 3, 4.

Die Membran 5 wird von einem Antriebs-/Empfangselement 6 in Schwingungen versetzt, wobei das Antriebselement die Membran 5 mit einer vorgegebenen Erregerfrequenz zu Schwingungen anregt. Bei dem Antriebselement handelt es sich z. B. um einen Stapelantrieb oder um einen Bimorphantrieb. Beide Arten von piezo-elektrischen Antrieben sind aus dem Stand der Technik hinreichend bekannt, so daß an dieser Stelle auf eine entsprechende Beschreibung verzichtet werden kann. Aufgrund der Schwingungen der Membran 5 führt auch die schwingfähige Einheit 2 Schwingungen aus, wobei die Schwingfrequenzen unterschiedlich sind, wenn die schwingfähige Einheit 2 mit dem Medium in Kontakt ist und eine Ankopplung an die Masse des Mediums besteht, oder wenn die schwingfähige Einheit 2 frei und ohne Kontakt mit dem Medium schwingen kann.

Bei der Empfangseinheit kann es sich beispielsweise ebenso wie bei der Antriebseinheit um ein einziges Piezoelement handeln. Die Antriebs-/Empfangseinheit 6 regt die Membran 5 zu Schwingungen in Abhängigkeit von einem an dem Piezoelement anliegenden Sendesignal an; weiterhin dient sie zum Empfangen und Umwandeln der Schwingungen der Membran 5 in elektrische Empfangssignale.

Aufgrund dieses Schwingungsverhaltens des piezo-elektrischen Elements bewirkt die Spannungsdifferenz ein Durchbiegen der in das Gehäuse eingespannten Membran 5. Die auf der Membran 5 angeordneten Schwingstäbe 3, 4 der schwingfähigen Einheit 2 führen aufgrund der Schwingungen der Membran 5 gegensinnige Schwingungen um ihre Längsachse aus. Moden mit gegensinnigen Schwingungen haben den Vorteil, daß sich die von jedem Schwingstab 3, 4 auf die Membran 5 ausgeübten Wechselkräfte gegenseitig aufheben. Hierdurch wird die mechanische Beanspruchung der Einspannung minimiert, so daß näherungsweise keine Schwingungsenergie auf das Gehäuse oder auf die Befestigung des Vibrationsdetektors übertragen wird. Hierdurch läßt sich effektiv verhindern, daß die Befestigungsmittel des Vibrationsdetektors 1 zu Resonanzschwingungen angeregt werden, die wiederum mit den Schwingungen der schwingfähigen Einheit interferieren und die Meßdaten verfälschen könnten.

Die elektrischen Empfangssignale werden über Datenleitungen 8, 9 an die Regel-/Auswerteeinheit 10 weitergeleitet. Der Regel-/Auswerteeinheit 10 ist eine Speichereinheit 11 zugeordnet, in der Sollwerte abgelegt sind, die es der Regel-/Auswerteeinheit erlauben, eine Ansatzbildung an der schwingfähigen Einheit 2 zu erkennen und gegebenenfalls korrigierend auf die Meßwerte Einfluß zu nehmen. Eine Fehlermeldung wird dem Bedienpersonal im gezeigten Fall über die Ausgabeeinheit 14 übermittelt. Weiterhin ist in Fig. 1 die von dem Vibrationsdetektor 1 entfernt angeordnete Kontroll- oder Leitstelle 12 zu sehen. Die Regel-/Auswerteeinheit 10 und die Kontrollstelle 12 kommunizieren miteinander über die Datenleitung 13. Bevorzugt erfolgt die Kommunikation wegen der erhöhten Störsicherheit der Übertragung auf digitaler Basis.

Die Figuren Fig. 2a, Fig. 2b, Fig. 2c und Fig. 2d zeigen vier ausgewählte und mögliche Schwingungsmoden einer schwingfähigen Einheit 2 mit zwei paddelförmig ausgebildeten Schwingstäben 3, 4. Bei dem in Fig. 2b dargestellten Mode B ist die Eintauchkurve ΔF im wesentlichen unabhängig von der Massenankopplung $m_k$ an das Medium, da infolge der parallel zur Paddelfläche erfolgenden Schwingbewegungen die mit dem Medium wechselwirkenden Querschnittsflächen relativ klein sind. Die Schwingungsfrequenz ist daher im wesentlichen unabhängig von der Eintauchtiefe h der schwingfähigen Einheit 2 in das Medium, sie zeigt aber eine deutliche Abhängigkeit von der an den Schwingstäben 3, 4 vorhandenen Ansatzmasse $m_a$. Wie bereits mehrfach erwähnt, gelten analoge Überlegungen auch für einen Massenverlust, der an der schwingfähigen Einheit auftritt. Im Rahmen gewisser Toleranzen läßt sich daher aus einer Frequenzänderung ΔF des Modes B ein eindeutiger Schluß auf die an den Schwingstäben 3, 4 vorhandene Ansatzmasse $m_a$ ziehen.

Graphisch ist dieser funktionale Zusammenhang in Fig. 3 zu sehen. Fig. 3 zeigt die Eintauchkurven ΔF(h) der in Fig. 2b dargestellten Moden A und B mit und ohne Ansatzmasse $m_a$. Dargestellt sind in Fig. 3 auch die entsprechenden Eintauchkurven ΔF(h) bei einer negativen Massenänderung der schwingfähigen Einheit 2, also einem Masseverlust ($m_k$) an der schwingfähigen Einheit 2; ein Masseverlust tritt z. B. infolge von Korrosion oder mechanischer Abnutzung der Schwingstäbe 3, 4 auf. Die Eintauchkurven ΔF(h), also die Frequenzänderung ΔF des Modes B in Abhängigkeit von der Eintauchtiefe h, haben unabhängig von der Masse der schwingfähigen Einheit 2 näherungsweise die Steigung Null. Sie verlaufen also im wesentlichen parallel zur x-Achse. Logischerweise wird die Frequenzänderung ΔF mit wachsender bzw. fallender Massenänderung $m_a$ größer. Ein gänzlich anderes Verhalten zeigen die Eintauchkurven ΔF(h) des gleichfalls in Fig. 3 darstellten Modes A: Eine Frequenzänderung wird hier ganz klar von der Eintauchtiefe h der schwingfähigen Einheit 2 in das Medium dominiert. Wiederum drückt sich eine positive oder negative Massenänderung $m_a$, $m_k$ der schwingfähigen Einheit 2 in einer Parallelverschiebung der Eintauchkurven ΔF(h) aus.

Beide Moden, Mode A und Mode B, sind daher bestens dazu geeignet, in Verbindung mit einer ersten Ausgestaltung des erfindungsgemäßen Verfahrens verwendet zu werden. Gemäß der ersten Variante des erfindungsgemäßen Verfahrens erfolgt die Bestimmung des Grades der Ansatzbildung (bzw. des Massenverlusts) nämlich anhand zweier Moden, wobei es sich bei dem ersten Mode um einen Mode handelt, dessen Schwingungen im wesentlichen unabhängig sind von dem Medium, und wobei es sich bei dem zweiten Mode um einen Mode handelt, dessen Schwingungen im wesentlichen nur von dem Medium beeinflußt werden.

Die anhand des von der Ansatzmasse $m_a$ (bzw. dem Masseverlust) abhängigen Modes B ermittelte Frequenzänderung ΔF wird - wie eine vorteilhafte Ausgestaltung des erfindungsgemäßen Verfahrens vorschlägt - zur Inline-Korrektur der Meßdaten des Vibrationsdetektors 1 herangezogen. Weiterhin können die Informationen über den Grad der Ansatzbildung an der schwingfähigen Einheit 2 bzw. des Massenverlusts der schwingfähigen Einheit 2 auch für 'Predictive Maintenance'-Zwecke herangezogen werden: Dem Bedienpersonal wird angezeigt oder mitgeteilt, wann die schwingfähige Einheit 2 gereinigt oder durch eine ansatzfreie Einheit 2 ersetzt werden muß.

Die Figuren Fig. 2c und Fig. 2d zeigen zwei weitere mögliche Moden einer schwingfähigen Einheit 2 mit zwei paddelförmig ausgebildeten Schwingstäben 3, 4, die bevorzugt bei der zweiten Variante des erfindungsgemäßen Verfahrens eingesetzt werden. Voraussetzung ist hier, daß beide Moden C und D sowohl eine Abhängigkeit von der Massenankopplung $m_k$ der schwingfähigen Einheit an das Medium als auch eine Abhängigkeit von der Ansatzmasse, die sich an der schwingfähigen Einheit gebildet hat, aufweisen. Weiterhin müssen sich die beiden ausgewählten Moden deutlich hinsichtlich ihrer Eintauchkurven ΔF(h) voneinander unterscheiden. Daß dies der Fall ist, läßt sich anhand der in Fig. 4 gezeigten skizzierten Kurvenscharen klar erkennen.

In Fig. 5 sind übrigens die Ansatzkurven ΔF($m_a$) des Modes A, B und C dargestellt. Während Mode B nur eine geringe Abhängigkeit von der Ansatzmasse $m_a$ aufweist, zeigen die Moden C und D eine starke Abhängigkeit von einer Massenänderung an der schwingfähigen Einheit 2.

Mathematisch formal lassen sich die Eintauchkurven ΔF(h) der beiden Moden C und D in erster Näherung (der Mischterm wird vernachlässigt) durch folgendes Gleichungssystem beschreiben:

$$\Delta F_C = f_C^1(m_k) + f_C^2(m_a) \qquad (1)$$

$$\Delta F_D = f_D^1(m_k) + f_D^2(m_a) \qquad (2)$$

Dieses Gleichungssystem muß nach $m_a = f(\Delta F_0, \Delta F_x)$ aufgelöst werden. Aus Gleichung (1) folgt:

$$f_C^2(m_a) = \Delta F_C - f_C^1(m_k) \qquad (3)$$

Aus Gleichung (2) folgt:

$$f_D^1(m_k) = \Delta F_D - f_D^2(m_a) \qquad (4)$$

$$m_k = f_D^{1^{-1}}\left(\Delta F_D - f_D^2(m_a)\right) \qquad (5)$$

Bevorzugt wird übrigens ein numerisches Lösungsverfahren angewendet.

Aus (3) und (5) ergibt sich:

$$f_C^2(m_a) = \Delta F_C - f_C^1\left[ f_D^{1^{-1}}\left( \Delta F_D - f_D^2\left( f_C^{2^{-1}}\left( \Delta F_C - f_C^1(m_k) \right) \right) \right) \right] \qquad (6)$$

Die Angabe einer expliziten Formel für $m_a$ erübrigt sich übrigens, da letztlich nur die relative Frequenzänderung des Modes C interessiert, die durch die Ansatzbildung verursacht wird. Der Grenzwert für $f_C^2(m_a)$ muß so festgelegt werden, daß stets ein sicheres Detektieren des vorbestimmten Füllstandes bzw. der Dichte des Mediums innerhalb der toleriebaren Grenzen gewährleistet ist.

Die in Fig. 4 und Fig. 5 dargestellten vorzugsweise empirisch ermittelten Eintauchkurven und Ansatzkurven lassen sich in bekannter Weise durch Näherungsfunktionen approximieren und damit mathematisch beschreiben.

Über das Gleichungssystem und die durch Approximation gewonnenen Kurven läßt sich für jedes gemessene Frequenzdifferenz-Tupel $\Delta F_C$, $\Delta F_D$ der Wert für $f_C^2(m_a)$, also die relative Frequenzänderung des Modes C in Abhängigkeit von der Ansatzmasse $m_a$ bestimmen.

In Fig. 6 sind die Meßwerte der Frequenzdifferenz-Tupel über $\Delta F_C$, $\Delta F_D$ aufgetragen. Die Meßpunkte unterscheiden sich hinsichtlich der Eintauchtiefe h und/oder hinsichtlich der an der schwingfähigen Einheit gebildeten Ansatzmasse $m_a$. Die Meßpunkte mit gleicher Ansatzmasse $m_a$ sind in Fig. 7 jeweils miteinander verbunden. Die Meßwerte im oberen Bereich von Fig. 6 repräsentieren den Zustand 'Wenig Ansatzmasse', während die Meßwerte im unteren Bereich den Zustand 'Viel Ansatzmasse' repräsentieren. Um die Meßdaten auszuwerten, genügt es folglich, wenn die Regel-/Auswerteeinheit 10 die Frequenzänderungen zweier hinreichend unterschiedlicher Schwingungsmoden, im dargestellten Fall Mode C und Mode D, mißt und mit Werten, die in einer Tabelle abgespeichert sind, vergleicht. Anhand der Lage der Meßwerte läßt sich dann klar unterscheiden, ob die Ansatzbildung bzw. der Masseverlust noch im unkritischen Bereich liegt oder ob ein Alarm ausgelöst werden muß.

**Bezugszeichenliste**

1    Vibrationsdetektor bzw. Dichtesensor
2    Schwingfähige Einheit
3    Schwingstab
4    Schwingstab
5    Membran
6    Erreger-/Empfangseinheit
7    Gewinde

8 Datenleitung
9 Datenleitung
10 Regel-/Auswerteeinheit
11 Speichereinheit
12 Kontrollstelle
13 Datenleitung
14 Ausgabeeinheit

**Patentansprüche**

1. Verfahren zur Feststellung und/oder Überwachung des Füllstandes eines Mediums in einem Behälter bzw. zur Ermittlung der Dichte eines Mediums in dem Behälter,
   wobei eine schwingfähige Einheit auf der Höhe des vorbestimmten Füllstandes angebracht wird bzw. wobei eine schwingfähige Einheit so angebracht wird, daß sie bis zu einer definierten Eintauchtiefe in das Medium eintaucht, wobei die schwingfähige Einheit mittels einer Erregerschwingung zu Schwingungen angeregt wird
   und wobei das Erreichen des vorbestimmten Füllstandes erkannt wird, sobald die schwingfähige Einheit mit einer Schwingfrequenz schwingt, die eine vorbestimmte Frequenz-änderung gegenüber der Erregerfrequenz aufweist, bzw. wobei die Dichte des Mediums anhand der Schwingfrequenz der schwingfähigen Einheit ermittelt wird,
   **dadurch gekennzeichnet,**
   **daß** zumindest ein erster Mode und ein zweiter Mode der Schwingungen der schwingfähigen Einheit (2) ausgewertet werden und
   **daß** anhand der ausgewerteten Moden eine Massenänderung an der schwingfähigen Einheit (2) erkannt wird, und
   **dass** die von der Massenänderung abhängige Änderung der Schwingfrequenz der Schwingungen der schwingfähigen Einheit (2) für eine Korrektur der Messdaten für Füllstand bzw. Dichte des Mediums verwendet wird.

2. Verfahren nach Anspruch 2,
   **dadurch gekennzeichnet,**
   **daß** als erster und zweiter Mode Moden ausgewertet werden, deren Schwingungen von dem Medium unterschiedlich beeinflußt werden.

3. Verfahren nach Anspruch 1 oder 2,
   **dadurch gekennzeichnet,**
   **daß** es sich bei dem ersten Mode um einen Mode handelt, dessen Schwingungen im wesentlichen unabhängig sind von dem Medium, und
   **daß** es sich bei dem zweiten Mode um einen Mode handelt, dessen Schwingungen im wesentlichen von dem Medium beeinflußt werden.

4. Verfahren nach Anspruch 1 oder 3,
   **dadurch gekennzeichnet,**
   **daß** anhand einer Änderung des ersten Modes, dessen Schwingungen im wesentlichen unabhängig von dem Medium sind, erkannt wird, ob eine Massenänderung an der schwingfähigen Einheit (2) aufgetreten ist.

5. Verfahren nach Anspruch 1, 3 oder 4,
   **dadurch gekennzeichnet,**
   **daß** anhand einer Frequenzänderung der Schwingungen des ersten Modes erkannt wird, ob an der schwingfähigen Einheit (2) eine Massenänderung aufgetreten ist.

6. Verfahren nach Anspruch 1 oder 2,
   **dadurch gekennzeichnet,**
   **daß** als erster Mode und als zweiter Mode der Schwingungen der schwingfähigen Einheit (2) zwei Moden ausgewählt werden, wobei beide Moden jeweils einen ersten Anteil aufweisen, der abhängig ist von dem Medium, und wobei beide Moden einen zweiten Anteil aufweisen, der im wesentlichen unabhängig ist von dem Medium und im wesentlichen nur von der jeweiligen Masse der schwingfähigen Einheit (2) abhängig ist.

7. Verfahren nach Anspruch 6,
   **dadurch gekennzeichnet,**

**daß** anhand der funktionalen Abhängigkeit des ersten und des zweiten Modes der Schwingungen der schwingfähigen Einheit (2) von dem Medium bzw. von der Masse der schwingfähigen Einheit (2) Rückschlüsse auf die Masse des Ansatzes, der sich an der schwingfähigen (2) Einheit gebildet hat, gezogen werden.

8. Verfahren nach einem oder mehreren der Ansprüche 1 bis 5 oder nach Anspruch 6 oder 7,
**dadurch gekennzeichnet,**
**daß** eine Fehlermeldung ausgegeben wird, wenn die durch die Massenänderung an der schwingfähigen Einheit hervorgerufenen Änderungen des ersten und/oder des zweiten Modes der Schwingungen der schwingfähigen Einheit (2) einen vorgegebenen Sollwert überschreiten.

9. Verfahren nach einem oder mehreren der Ansprüche 1 bis 6 oder nach Anspruch 6 oder 7,
**dadurch gekennzeichnet,**
**daß** eine durch eine Massenänderung an der schwingfähigen Einheit (2) hervorgerufene Änderung des ersten und/ oder des zweiten Modes der Schwingungen der schwingfähigen Einheit (2) dazu verwendet wird, eine Inline-Korrektur der Schwingfrequenz der schwingfähigen Einheit (2) vorzunehmen.

10. Vorrichtung zur Feststellung und/oder Überwachung des Füllstandes eines Mediums in einem Behälter bzw. zur Ermittlung der Dichte eines Mediums in dem Behälter,
wobei eine schwingfähige Einheit vorgesehen ist, die auf der Höhe des vorbestimmten Füllstandes angebracht ist bzw. wobei eine schwingfähige Einheit so angebracht ist, daß sie bis zu einer definierten Eintauchtiefe in das Medium eintaucht,
wobei eine Antriebs-/Empfangseinheit vorgesehen ist, die die schwingfähige Einheit mit einer vorgegebenen Erregerfrequenz zu Schwingungen anregt und die die Schwingungen der schwingfähigen Einheit empfängt, und wobei eine Regel-/Auswerteeinheit vorgesehen ist, die das Erreichen des vorbestimmten Füllstandes erkennt, sobald eine vorgegebene Frequenzänderung auftritt bzw. die anhand der Schwingfrequenz der schwingfähigen Einheit die Dichte des Mediums ermittelt,
**dadurch gekennzeichnet,**
**daß** die Regel-/Auswerteeinheit (10) dazu eingerichtet ist:

i) zumindest einen ersten Mode und einen zweiten Mode der Schwingungen der schwingfähigen Einheit (2) zur Auswertung zu verwenden und
ii) anhand der ausgewerteten Moden eine Massenänderung an der schwingfähigen Einheit (2) zu erkennen, und iii) anhand der von der Massenänderung abhängigen Änderung der Schwingfrequenz der Schwingungen der schwingfähigen Einheit (2) die Messdaten für Füllstand bzw. Dichte des Mediums zu Korrigieren.

11. Vorrichtung nach Anspruch 10,
**dadurch gekennzeichnet,**
**daß** die Auswerte-/Regeleinheit (10) in die Vorrichtung zur Bestimmung und/oder Überwachung des Füllstandes bzw. zur Bestimmung der Dichte des Mediums integriert ist.

12. Vorrichtung nach Anspruch 10 oder 11,
**dadurch gekennzeichnet,**
**daß** zumindest zwei Datenleitungen (8, 9) vorgesehen sind, über die Meßdaten zur Auswerte-/Regeleinheit (10) geleitet werden oder über die die Auswerte-/Regeleinheit (10) mit einer entfernten Kontrollstelle (12) kommuniziert.

13. Vorrichtung nach einem oder mehreren der Ansprüche 10 bis 12,
**dadurch gekennzeichnet,**
**daß** eine Ausgabeeinheit (14) vorgesehen ist, die optisch und/oder akustisch eine Fehlermeldung an das Bedienpersonal ausgibt, wenn, bevorzugt im Rahmen vorgegebener Toleranzwerte, ein vorgegebener Sollwert der Frequenzänderung über- oder unterschritten wird, der auf eine Massenänderung an der schwingfähigen Einheit (2) zurückgeht.

14. Vorrichtung nach Anspruch 10 oder 13,
**dadurch gekennzeichnet,**
**daß** der Regel-/Auswerteeinheit (10) eine Speichereinheit (11) zugeordnet ist, in der Sollwerte für tolerierbare Frequenzänderungen, die auf eine Massenänderung an der schwingfähigen Einheit (2) zurückgehen, abgespeichert sind.

**15.** Vorrichtung nach Anspruch 12,
**dadurch gekennzeichnet,**
**daß** die Meßdaten und die Daten über die Ansatzbelegung der schwingfähigen Einheit (2) digital an die entfernte Kontrollstelle (13) übertragen werden.

**Claims**

**1.** Method to determine and/or monitor the level of a medium in a container, or to determine the density of a medium in the container,
where a unit capable of oscillation is placed at the height of the predetermined level or, where a unit capable of oscillation is fitted in such a way that it is immersed to a defined immersion depth in the medium,
wherein the unit capable of oscillation is excited to oscillate via an exciter oscillation and where the system detects that the predetermined level is reached as soon as the unit capable of oscillation oscillates at an oscillation frequency that shows a predetermined frequency change relative to the exciter frequency, or
where the density of the medium is determined on the basis of the oscillation frequency of the unit capable of oscillation
**characterized in that**
at least a first mode and a second mode of the oscillations of the unit capable of oscillation (2) are evaluated
and that, on the basis of the evaluated modes; a change in mass is detected at the unit capable of oscillation (2),
and that the change in the oscillation frequency of the oscillations of the unit capable of oscillation (2), where said change depends on the change in the mass, is used to correct the measured data for the level or density of the medium.

**2.** Method as per Claim 2,
**characterized in that**
modes whose oscillations are differently affected by the medium are evaluated as the first and second mode.

**3.** Method as per Claim 1 or 2,
**characterized in that**
the first mode is a mode whose oscillations are primarily independent of the medium, and **in that** the second mode is a mode whose oscillations are primarily affected by the medium.

**4.** Method as per Claim 1 or 3,
**characterized in that**
on the basis of a change in the first mode, whose oscillations are primarily independent of the medium, the system detects whether a change in mass has occurred at the unit capable of oscillation (2).

**5.** Method as per Claim 1, 3, or 4,
**characterized in that**
on the basis of a change in the frequency of the oscillations of the first mode, the system detects whether a change in mass has occurred at the unit capable of oscillation (2).

**6.** Method as per Claim 1 or 2,
**characterized in that**
two modes are selected as the first mode and second mode of the oscillations of unit capable of oscillation (2), where both modes have a first part that is dependent on the medium, and where both modes have a second part that is primarily independent of the medium, and is primarily only dependent on the individual mass of the unit capable of oscillation (2).

**7.** Method as per Claim 6,
**characterized in that**
conclusions can be made as to the mass of the buildup that has formed on the unit capable of oscillation (2) on the basis of the functional dependency of the first and second mode of the oscillations of the unit capable of oscillation (2) on the medium or on the mass of the unit capable of oscillation (2).

**8.** Method as per one or more of the Claims 1-5, or as per Claim 6 or 7,
**characterized in that**
an error message is output if the changes of the first and/or second mode of the oscillations of unit capable of oscillation (2), which were caused by the change in mass at the unit capable of oscillation, exceed a predefined set value.

9. Method as per one or more of the Claims 1-6, or as per Claim 6 or 7,
   **characterized in that**
   a change of the first and/or second mode of the oscillations of unit capable of oscillation (2), which was caused by a change in mass at the unit capable of oscillation (2), is used to perform an inline correction of the oscillation frequency of the unit capable of oscillation (2).

10. Device for determining and/or monitoring the level of a medium in a container, or to determine the density of a medium in the container
    where a unit capable of oscillation is provided which is placed at the height of the predetermined level or, where a unit capable of oscillation is fitted in such a way that it is immersed to a defined immersion depth in the medium, where a drive/receiver unit is provided which causes the unit capable of oscillation to oscillate at a predefined exciter frequency and which receives the oscillations of the unit capable of oscillation, and where a control/evaluation unit is provided that detects when the predefined level is reached as soon as a predefined change in frequency occurs, or which determines the density of the medium on the basis of the oscillation frequency of the unit capable of oscillation,
    **characterized in that**
    the control/evaluation unit (10) is set up (i) to use at least one first mode and one second mode of the oscillations of the unit capable of oscillation (2) and

    (ii) to detect a change in mass at the unit capable of oscillation (2) on the basis of the evaluated modes and
    (iii) to correct the measured data for the level or density of the medium on the basis of the change in the oscillation frequency of the oscillations of the unit capable of oscillation (2), said change being dependent on the change in mass.

11. Device as per Claim 10,
    **characterized in that**
    the evaluation/control unit (10) is integrated in the device to determine and/or monitor the level or to determine the density of the medium.

12. Device as per Claim 10 or 11,
    **characterized in that**
    at least two data cables (8, 9) are provided via which measured data are sent to the evaluation/control unit (10) and via which the evaluation/control unit (10) communicates with a remote control station (12).

13. Device as per one or more of the Claims 10-12,
    **characterized in that**
    an output unit (14) is provided that outputs a visual and/or acoustic error signal to the operating staff if - preferably in the context of predefined tolerance values - a predefined set value for frequency change is exceeded or undershot which is due to a change in the mass at the unit capable of oscillation (2).

14. Device as per Claim 10 or 13
    **characterized in that**
    a memory unit (11) is assigned to the control/evaluation unit (10) and stores set values for tolerable changes in frequency that are caused by a change in the mass at the unit capable of oscillation (2).

15. Device as per Claim 12
    **characterized in that**
    the measured data and the data on the buildup on the unit capable of oscillation (2) are transmitted to the remote control station (13) by digital means.

**Revendications**

1. Procédé destiné à la détermination et/ou la surveillance du niveau de remplissage d'un produit dans un réservoir, ou destiné à la détermination de la densité d'un produit dans le réservoir,
   une unité apte à osciller étant installée à hauteur du niveau de remplissage prédéfini, ou une unité apte à osciller étant installée de telle manière à être immergée dans le produit jusqu'à une profondeur d'immersion définie, l'unité apte à osciller étant excitée en vibrations au moyen d'une oscillation d'excitation et l'atteinte du niveau de remplissage prédéfini étant détectée dès que l'unité apte à osciller oscille à la fréquence d'oscillation, qui présente un changement de fréquence prédéfini par rapport à la fréquence d'excitation, la densité du produit étant déterminée au moyen de la fréquence d'oscillation de l'unité apte à osciller,
**caractérisé en ce**
**qu'**au moins un premier mode et un deuxième mode des oscillations de l'unité apte à osciller (2) sont interprétés et **qu'**au moyen des modes interprétés, un changement de masse est détecté sur l'unité apte à osciller (2) et
en ce que le changement, dépendant du changement de masse, de la fréquence des oscillations de l'unité apte à osciller (2) est utilisé pour une correction des données de mesure relatives au niveau de remplissage ou à la densité du produit.

2. Procédé selon la revendication 2,
**caractérisé en ce**
**que** sont interprétés en tant que premier et deuxième mode, des modes dont les oscillations sont influencées différemment par le produit.

3. Procédé selon la revendication 1 ou 2,
**caractérisé en ce**
**que**, concernant le premier mode, il s'agit d'un mode dont les oscillations sont pour l'essentiel indépendantes du produit, et en ce que, concernant le deuxième mode, il s'agit d'un mode dont les oscillations sont pour l'essentiel influencées par le produit.

4. Procédé selon la revendication 1 ou 3,
**caractérisé en ce**
**qu'**une modification du premier mode, dont les oscillations sont pour l'essentiel indépendantes du produit, permet de détecter si un changement de masse a eu lieu sur l'unité apte à osciller (2).

5. Procédé selon la revendication 1, 3 ou 4,
**caractérisé en ce**
**qu'**un changement de fréquence des oscillations du premier mode permet de détecter si un changement de masse a eu lieu sur l'unité apte à osciller (2).

6. Procédé selon la revendication 1 ou 2,
**caractérisé en ce**
**qu'**en tant que premier mode et qu'en tant que deuxième mode des oscillations de l'unité apte à osciller (2), deux modes sont sélectionnés, ces deux modes présentant chacun une première part, qui est dépendante du produit, et ces deux modes présentant chacun une deuxième part, qui est pour l'essentiel indépendante du produit et ne dépend pour l'essentiel que de la masse respective de l'unité apte à osciller (2).

7. Procédé selon la revendication 6,
**caractérisé en ce**
**que** la dépendance fonctionnelle du premier et du deuxième mode des oscillations de l'unité apte à osciller (2) permet de tirer des conclusions, à partir du produit ou de la masse de l'unité apte à osciller (2), quant à la masse du dépôt, qui s'est formé sur l'unité apte à osciller (2).

8. Procédé selon l'une ou plusieurs des revendications 1 à 5 ou selon la revendication 6 ou 7,
**caractérisé en ce**
**qu'**un message d'erreur est émis lorsque les modifications, suscitées par le changement de masse sur l'unité apte à osciller, du premier et/ou du deuxième mode des oscillations de l'unité apte à osciller (2), dépassent une valeur de consigne prédéfinie.

9. Procédé selon l'une ou plusieurs des revendications 1 à 6 ou selon la revendication 6 ou 7,
**caractérisé en ce**
**qu'**une modification du premier et/ou du deuxième mode des oscillations de l'unité apte à osciller (2), suscitée par un changement sur l'unité apte à osciller (2), est utilisée dans le but de procéder à une correction en ligne de la fréquence d'oscillation de l'unité apte à osciller (2).

**10.** Dispositif destiné à la détermination et/ou la surveillance du niveau de remplissage d'un produit dans un réservoir, ou destiné à la détermination de la densité d'un produit dans le réservoir, pour lequel est prévue une unité apte à osciller (2), qui est installée à hauteur du niveau de remplissage prédéfini, ou pour lequel une unité apte à osciller est installée de telle manière à être immergée dans le produit jusqu'à une profondeur d'immersion définie, une unité d'entraînement / de réception étant prévue, laquelle excite l'unité apte à osciller en vibrations avec une fréquence d'excitation prédéfinie et reçoit les oscillations de l'unité apte à osciller, et une unité de régulation / d'exploitation étant prévue, laquelle détecte l'atteinte du niveau de remplissage prédéfini sitôt qu'un changement de fréquence a lieu, ou qui détermine au moyen de la fréquence d'oscillation de l'unité apte à osciller la densité du produit,

**caractérisé en ce**

**que** l'unité de régulation / d'exploitation (10) est configurée de telle manière :

i) à utiliser au moins un premier mode et un deuxième mode des oscillations de l'unité apte à osciller (2) en vue de l'exploitation, et

ii) à détecter au moyen des modes interprétés d'un changement de masse sur l'unité apte à osciller (2) et

iii) à corriger au moyen du changement de la fréquence des oscillations de l'unité apte à osciller (2), fonction du changement de masse, les données de mesure relatives au niveau de remplissage ou à la densité du produit.

**11.** Dispositif selon la revendication 10,

**caractérisé en ce**

**que** l'unité d'exploitation / de régulation (10) est intégrée dans le dispositif en vue de la détermination et/ou la surveillance du niveau de remplissage ou en vue de la détermination de la densité du produit.

**12.** Dispositif selon la revendication 10 ou 11,

**caractérisé en ce**

**que** sont prévues au moins deux lignes de données (8, 9), par l'intermédiaire desquelles les données de mesure sont acheminées vers l'unité d'exploitation / de régulation (10), ou par l'intermédiaire desquelles l'unité d'exploitation / de régulation (10) communique avec une unité de contrôle distante (12).

**13.** Dispositif selon l'une ou plusieurs des revendications 10 à 12,

**caractérisé en ce**

**qu'**est prévue une unité de sortie (14), qui émet un message d'erreur optique et/ou acoustique au personnel de service, si, de préférence dans le cadre de valeurs de tolérance prédéfinies, une valeur de consigne prédéfinie du changement de fréquence est dépassée par le haut ou par le bas, qui découle d'un changement de masse sur l'unité apte à osciller (2).

**14.** Dispositif selon la revendication 10 ou 13,

**caractérisé en ce**

**que** l'unité d'exploitation / de régulation (10) est attribuée à une unité de mémoire (11), dans laquelle sont enregistrées les valeurs de consigne relatives aux changements de fréquence tolérables, qui découlent d'un changement de masse sur l'unité apte à osciller (2).

**15.** Dispositif selon la revendication 12,

**caractérisé en ce**

**que** les données de mesure et les données relatives à la masse de dépôt de l'unité apte à osciller (2) sont transmises de façon numérique à l'unité de contrôle distante (13).

Fig.1

Fig.2a

Fig.2b

Fig.2c

Fig.2d

Fig.3

Fig.4

16

Fig.5

Fig. 6

EP 1 266 194 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0282251 A